(19) Europäisches Patentamt
European Patent Office
Office européen des brevets

(11) **EP 4 477 295 A1**

(12) **EUROPEAN PATENT APPLICATION**

(43) Date of publication:
    **18.12.2024 Bulletin 2024/51**

(21) Application number: **24386008.7**

(22) Date of filing: **25.01.2024**

(51) International Patent Classification (IPC):
    **B01D 53/62** (2006.01)    **B01D 47/10** (2006.01)
    **B01D 47/12** (2006.01)    **B01D 53/75** (2006.01)
    **B01D 53/78** (2006.01)    **B01D 53/92** (2006.01)
    **C02F 1/44** (2023.01)

(52) Cooperative Patent Classification (CPC):
    **B01D 53/62; B01D 47/10; B01D 47/12;**
    **B01D 53/75; B01D 53/78; B01D 53/92;**
    **C02F 1/441; C02F 1/66;** B01D 2251/304;
    B01D 2251/604; B01D 2252/102; B01D 2252/1035;
    B01D 2257/302; B01D 2257/404; B01D 2257/504;

(Cont.)

(84) Designated Contracting States:
    **AL AT BE BG CH CY CZ DE DK EE ES FI FR GB**
    **GR HR HU IE IS IT LI LT LU LV MC ME MK MT NL**
    **NO PL PT RO RS SE SI SK SM TR**
    Designated Extension States:
    **BA**
    Designated Validation States:
    **GE KH MA MD TN**

(30) Priority: **15.06.2023 GR 20230100482**

(71) Applicant: **Pittas, Nicholas**
    **26504 Patras (GR)**

(72) Inventor: **Pittas, Nicholas**
    **26504 Patras (GR)**

(54) **AUTOMATIC SYSTEM FOR THE NEUTRALIZATION OF GREENHOUSE GAS EMISSIONS FROM SHIP CHIMNEYS BY THERMAL POWER PLANT UNITS WITH SIMULTANEOUS ENERGY RECOVERY**

(57)    The automatic system for the neutralization of greenhouse gas emissions from ship chimneys with simultaneous energy recovery is characterized by a unit consisting of submerged pumps of suitable flow and pressure supplying the tank (1) for the operation of the desalinator (2) through the reverse osmosis process. The desalinated water is then supplied to a tank (3), where a suitable quantity of alkaline solution, preferably NaOH with the appropriate pH, is introduced through a dosing pump (4) supplied by the NaOH tank (5). The alkaline solution is then fed through a pump (6) with suitable pressure and sprayed into three or more positions for the ionization of flue gases. These positions include the first position, downstream at the entrance of the flue gases into the quench (7) in the venturi tube (8), which constitutes the second position. Together, these form the first stage of processing-ionization of the scrubber. In the third position, the second ionization stage (10) occurs in the Spray tower of the scrubber, where the flue gases exit from the second tower (10) and enter the bottom of the third tower (27) through a ventilation duct with an ammonium hydroxide solution.

FIGURE 1

(52) Cooperative Patent Classification (CPC): (Cont.)
    B01D 2258/012; B01D 2259/4566; C02F 2103/08

**Description**

In my patent application No 20190100160, an innovative system was disclosed for neutralizing gas pollutants emitted from the chimneys of ships by cationization.

With this amendment, the above patent is differentiated from the original in the following points. It is also emphatically clarified that the purpose of this invention is the high efficiency in neutralizing gas pollutants emitted from ships' chimneys or thermoelectric power generating units. Specifically, it is designed for use on ships where the system must occupy minimal volume, consume minimal energy, and use minimal water volume. Existing systems do not meet the requirements of the IMO (International Maritime Organization) because they occupy a large volume, consume thousands of tons of water per hour (in contrast to the proposed system, which consumes 60 times less), resulting in high energy consumption and low efficiency due to their different operational principles compared to the proposed system. Most importantly, they fail to neutralize gas pollutants but convert gaseous pollutants into liquid pollutants, discarding them in their entirety into the sea, polluting it with millions of tons of waste daily.

To achieve maximum efficiency, the supply and spraying will be done with an alkaline solution from the third stage of cationization, specifically in the Spray tower (10). It will be supplied and sprayed using pumps drawing from the wash water collection tank located at its bottom and supplied by the tank (3), as depicted in Figure (1).

Once hydraulic balance is reached, the overflow of wash water from this tank will flow towards the wash water collection tank through the venturi pipe and quench (located internally at their bottom). Pumps will draw and spray the incoming flue gases, and their wash waters will fall into the same tank. After overflowing, they will proceed for treatment in the processing tank (12).

It is emphatically clarified that the modification of the patent differs from the original in the following points:

A) The diverting valves are abolished, and the gas flow is achieved by the negative pressure created by the fan (23). This results in a more effective continuous operation of the unit, avoiding the creation of back pressure problems in the main engine and potential valve blockages due to deposits of soot, particles, etc.

B) It is disclosed that the implementation of this innovation has been achieved on a real scale, and the certified results of the measurements of gas pollutant neutralization almost perfectly match those of theoretical simulations using the MINEQQL+ program (see measurement table on page 18).

C) Two additional towers, (27) and (30), are added to the unit, each with a different function and construction from the existing ones, so as to fully comply with the correct operation of the unit as a whole.

The operation of the third tower aims to capture carbon dioxide with ammonia solution (ammonium hydroxide), mainly creating ammonium bicarbonate. This substance is directed from the bottom, as a first option, towards the collection tank (33) of ammonium bicarbonate for use as fertilizer after removing a certain amount of water from it. As the second option, it passes through the thermal exchanger (29), which transfers the thermal load from the passage of ammonia from the fourth tower (30) to the third tower (27), and then enters the fourth tower as the ammonium bicarbonate solution, already heated, reducing the heat requirement from the flue gases through the thermal exchanger (32).

The operation of the fourth tower aims to thermally decompose the salt primarily resulting from ammonium bicarbonate at temperatures of 400C-500C and release carbon dioxide, which exits the fourth tower and is collected by liquefying it (second option) and ammonia, which returns to the third tower to continue its action.

D) Between the third and fourth towers, a thermal exchanger (29) is inserted. Its operation consists of extracting heat from the ammonium solution during its passage from the fourth tower to the third tower and transferring it to the ammonium bicarbonate during its passage from the third tower (27) to the fourth tower (30), namely the regeneration tower.

E) Additionally, there is a heat exchanger (28) operating with seawater, which extracts the remaining heat from the ammonium hydroxide solution of the third tower (27). This solution has been further enriched by the reintroduction of flue gases into the same tower (27). Consequently, this leads to a further reduction in temperature, following the continuous temperature reduction achieved as they pass through the thermal exchanger (32) and the successive stages of cationization during their passage through quench, venturi, Spray tower (10), and tower (27), due to the fact thar, by decreasing the temperature of the flue gases, their solubility increases according to Henry's law.

F) The ammonia solution exiting the tank (31) is introduced into the third tower (27), where, with a metering pump (36), flue gases are sprayed after their exit from the Spray tower (10). Ionization is achieved in the tower (27) exclusively and only with this ammonia solution. Recycling takes place with the wash products, mainly dual ammonium, which settle at the bottom.

It is also noted that the conveyance of wash products in the first two towers (venturi, Spray tower) with cationization using NaOH solution remains as written in the original patent, while, the conveyance of wash products from the third tower (27) with ammonia is different. It involves different and independent hydraulic circuits, as depicted in Figure (1).

G) The fan (23) is relocated downstream of the Spray tower (10), and now, in tower (10), the flue gases exit with negative pressure, while in tower (27), they enter with positive pressure.

H) The method of introducing flue gases exiting from the top of the Spray tower (10) through an air duct immersed in the ammonia solution in the bottom of tower (27) is explained in detail below.

The chemical reaction of burning heavy fuel oil in the combustion chamber of the cylinders of a two-stroke four-cycle diesel engine with a sulfur content of 3.5°/o is as follows:
The chemical formula of heavy fuel oil is $C_{16}H_{34}S_{0.25}$, since 1 mol ($C_{16}H_{34}S_{0.25}$) = 192+34+32x = 226+32x contains 32x S, and at 100, there is 3.5 S. Hence, x = 0.25.
Therefore,

$$C_{16}H_{34}S_{0.25} + 117.85/\sigma (0.21O_2 + 0.79N_2) \rightarrow 16CO_2 + 0.25SO_2 + 17H_2O + 24.75(1/\sigma - 1)O_2 + 93.1/\sigma N_2$$

And since the excess air is $\sigma$=0.015, it follows that $C_{16}H_{34}S_{0.25} + 117.85/0.015 (0.21O_2 + 0.79N_2) - 16CO_2 + 0.255O_2 + 17H_2O + 24.75(1/0.015 - 1)O_2 + 93.1/0.015 N_2$

And Finally, $C_{16}H_{34}S_{0.25} + 117.85/0.015 (0.21O_2 + 0.79N_2) - 16CO_2 + 0.25SO_2 + 17H_2O + 24.75(1/0.015 - 1)O_2 + 93.1/0.015 N_2$

Because combustion in the combustion chamber at the cylinder head is incomplete, obviously, carbon monoxide (CO) and nitrogen oxides (NOx) will be present in the flue gases.
In the flue gases exiting the ship's chimneys, SOx, NOx, as well as other volatile hydrocarbons resulting from combustion, are present.
The concentration of SOx in the exhaust gas is high because the sulfur content in the heavy fuel can be as high as 4%.
In general, the neutralization of gases from SOx with an efficiency ranging around 99% is achieved through an ionization process. To achieve high efficiency in cleaning, the temperature of the flue gases containing SOx must be low according to Henry's law because otherwise, the saturation degree of the droplets will be low, and consequently, the efficiency of the SOx precipitation will be low.
The velocity must exceed 104 m/s, so as to achieve the complete mixingrinsing of the gases with the droplets of the NaOH alkaline solution. The SOx will be precipitated in the form of sulfuric and sodium sulfide. As for CO2, after creating H2CO3, it will react with NaOH and produce Na2CO3. The nitrous and nitric compounds will yield sodium nitrite and sodium nitrate.
This is because the size of the molecules of the gases is orders of magnitude smaller than the size of the molecules of the solution cloud. According to statistical thermodynamics, the probable collision-mixing of these two fluids becomes more likely if the size of their molecules is approximately at the same level.
And to achieve the reduction of the order of magnitude of the droplets of the alkaline solution so that the difference does not exceed two orders of magnitude between them, we inject with high pressure, meaning high velocity of the droplets, in order to minimize the size of the droplets and increase the probability of contact.
The chemical reactions of the flue gas within the first two towers of the unit are the following:

$$SO_2(g) + \tfrac{1}{2} O_2(g) \rightarrow SO_3(g) \qquad (1)$$

$$2NO(g) + 1/2O_2(g) \rightarrow NO_2(g) \qquad (2)$$

$$NO_2(g) + H_2O \rightarrow 2HNO_3(aq) \qquad (3)$$

$$SO_3(g) + H_2O -7 H_2SO_4(aq) \qquad (4)$$

$$2CO(g) + O_2(g) \rightarrow 2CO_2(g) \qquad (5)$$

$$CO_2(g) + H_2O \leftrightharpoons CO_2(aq) \qquad (6)$$

$$CO_2(aq) + H_2O \text{ -7 } H_2CO_3(aq) \qquad (7)$$

The result of the above reactions is the formation of acids: HNO3, H2CO3, H2SO4.

It should be noted that SO2 and NOx are absorbed more rapidly in alkaline solutions compared to CO2. This results in the kinetic formation of Na2SO4 and NaNO3 over Na2CO3.

$$2NaOH(aq) + H_2SO_4(aq) \rightarrow Na_2SO_4(aq) + H_2O \qquad (8)$$

$$NaOH(aq) + HNO_3(aq) \rightarrow NaNO_3(aq) + H_2O \qquad (9)$$

The first two salts, Na2SO4 and NaNO3, also react with H2CO3 (reactions 10 and 11):

While the reactions of caustic soda with the produced acids are as follows:

$$Na_2SO_4 (aq) + H_2CO_3(aq) \text{ -7 } Na_2CO_3(aq) + H_2SO_4(aq) \qquad (10)$$

$$2NaNO_3(aq) + H_2CO_3(aq) \rightarrow Na_2CO_3(aq) + 2HNO_3(aq) \qquad (11)$$

$$2NaOH(aq) + H_2CO_3(aq) \rightarrow Na_2CO_3(aq) + 2H_2O \qquad (12)$$

Due to the production of Na2CO3 from reactions (10) and (11), which are much faster, equilibrium (12) shifts to the left (Le Chatelier's principle), resulting in lower consumption of NaOH compared to what is expected from the stoichiometry of the reaction.

Additionally, it should be noted that the temperature of the flue gases ranges from 390°C to 400°C, and it is necessary to reduce this temperature as much as possible. The first reduction of the temperature from 390°C to approximately 250°C is achieved during the passage of the flue gases through the ship's economizer (15). The second reduction of the flue gas temperature from 250°C to about 50°C is achieved during the passage of the flue gases through the heat exchanger (32). This increase in the degree of saturation, i.e., the capture of sulfur in the form of sulfur salts, carbonates, and nitrates, occurs through the process of ionization, which requires a large quantity of water that will be evaporated to further reduce the temperature of the gases.

1) It should be noted that seawater contains sulfur salts, carbonates, and chlorides, and the ability to capture more sulfur from flue gases with seawater is very limited because it is almost saturated. This explains the requirements for thousands of cubic meters per hour and the very low efficiency, as evident from the systems available on the global market for addressing this issue.

2) Additionally, if seawater is used, complications in the unit's operation will arise due to the deposition of salts such as Ca2SO4 (gypsum) and Ca2CO3 in the entire scrubber system and its associated piping.

3) To avoid operational complications and prevent the deposition of large quantities of salt due to evaporation, resulting from the need to use significant volumes of seawater, desalinated water will be produced on board through the process of reverse osmosis. However, this will increase the operational cost, such as the electrical energy required for production. Nevertheless, this choice is preferable over all others.

The flow of exhaust gases is as follows. Outgoing exhaust gases from the ship's economizer with a temperature fluctuating around 250°C move towards the chimney outlet. Due to the negative pressure created by the fan (23), the exhaust gases, before entering the quench, pass through a heat exchanger (32) with water. This heat exchanger reduces the temperature of the exhaust gases from around 250°C to approximately 500°C. Subsequently, in the venture tube, there is a further reduction in their temperature to 350°C-300°C, accompanied by a violent contraction of volume, due to the ionization with an alkaline solution received by the exhaust gases from the injectors placed in the quench (first stage of ionization) and in the venturi (second stage of ionization).

The washing products of the exhaust gases are collected at the bottom of the venturi collection tank. The exhaust gases, due to the applied negative pressure from the fan (23) (located overhead), are directed to the top, passing through the droplet separator. This causes the majority of these droplets to be removed, and after passing through the fan itself, they are propelled with positive pressure. Through the duct that transports them, ending with a sieve-like termination with a large number of holes all around, the gases enter below the free surface of the solution at a necessary depth in the third tower (27) of ionization with an aqueous solution of ammonium hydroxide.

Here, the exhaust gases release, in the form of small bubbles, mainly carbon dioxide and proportions of other gases that were not neutralized 100% previously. They break down on the surface of the solution, undergoing complete solubility and simultaneous neutralization by the alkaline base of ammonia. Simultaneously, they undergo cationization from the injectors and are sprayed with an ammonia solution stored in the tank (33). By introducing deionized water to them through the demineralizer (3) and its injection into the third tower (27), the exhaust gases, including carbon dioxide, rising in the form of small bubbles, move towards the top of the tower (27). Carbon dioxide is bound by ammonia and falls to the bottom of the tower as a mostly soluble salt of bicarbonate ammonia.

The desired level of alkalinity pH, whether of caustic soda or ammonia, in the respective towers is achieved using the appropriate control instruments -ph meters, with which all towers are equipped. Based on these levels, the necessary quantities are automatically metered and dispensed with dosing pumps, using the respective solutions in the corresponding towers. As in the first and second towers, recycling is carried out from the washing products of cationization with caustic soda. The same process is repeated in the third tower using the solution of ammonium hydroxide. It should also be noted that the third tower has a constructional specificity to meet a fundamental operational requirement to prevent ammonia leakage. Since ammonia is in a biphasic equilibrium, it tends to escape as a gas from the top of the third tower (27). For this reason, this tower has been elongated by 1/3 more in length compared to the other towers above the ammonia spraying recycling system. It is equipped with a second ionization system for ammonia with deionized water, allowing it to fall to the bottom of the third tower (27). At the top, for the same reason, it is equipped with a droplet retention device. This way, the release of ammonia into the air, which could cause irritation to the eyes and respiratory system, is prevented, creating a safe and healthy working environment. Simultaneously, the consumption of ammonia is minimized. Additionally, it should be noted that the kinetics of the reaction (8) on page 14 are much faster than other alkaline base reactors, and the achievement of thermal decomposition occurs at a much lower temperature than any other alkaline base, which is why it was selected. It is also important to highlight that the washing products of the third tower do not flow into the same collection tank (12) where NaNO3, Na2SO4, Na2SO3, NaNO2 are mainly collected, including ethyl acetate particles as combustion products. Instead, they are directed, as a primary choice to the tank (33) where bicarbonate ammonia, binding CO2, accumulates. After removing a certain amount of water through vaporization with the provision of heat from the heat exchanger (32) in combination with a vacuum pump, it will be used as fertilizer after being stored in the ship's tanks. It will then be unloaded into silos at selected port docks.

For the second option, ie of using carbon dioxide, thermal decomposition of bicarbonate ammonia must take place at the base of the fourth tower, which is achieved at around 40°C. Ammonia is reformed, and a portion of it, in gaseous form along with carbon dioxide, traverses the tower to exit from the droplet retention device. In order to prevent the escape of ammonia into the environment with all its associated consequences (high consumption, problematic working conditions, unhealthy environment, etc.) and its separation from carbon dioxide, the height of the tower was extended. Dense cationization with deionized water is performed, dragging ammonia towards the bottom of the fourth tower. The ammonia is then directed to the third tower (27), while the carbon dioxide, freed from ammonia, is primarily collected in a gas tank. This gas is subsequently supplied to one or more compressors, where, at a pressure close to 55 bar and a temperature below 320°C, it is liquefied. The liquefied gas is then transported to specialized silos at the docks for various applications.

The chemical reactions that take place in the third tower and partially in the fourth tower are as follows:

○

$$CO_2(g) + 2NH_3(g) \leftrightarrows NH_2COONH_4(s) \qquad (1)$$

○

$$NH_2COONH_4(s) + H_2O(g) \leftrightarrows (NH_4)_2CO_3(s) \qquad (2)$$

○

$$CO_2(g) + 2NH_3(g)^4 \leftrightarrows CO(NH_2)_2(s) + H_2O \qquad (3)$$

○

$$2NH_3(g) + CO_2(g) + H_2O(g) \leftrightarrows\downarrow (NH_4)_2CO_3(s) \qquad (5)$$

○

$$NH_3(g) + CO_2(g) + H_2O(g) \leftrightarrows\downarrow (NH_4)HCO_3(s) \qquad (6)$$

$$2NH_3(l) + CO_2(g) + H_2O(l) \leftrightarrows \downarrow (NH_4)_2CO_3(s) \qquad (7)$$

$$NH_3(l) + CO_2(g) + H_2O(l) \; t; \; (NH_4)HCO_3(s) \qquad (8)$$

The formation of the $NH_4^+$ ion and the $NH_2COO^-$ ion is achievable in the non-reversible chemical reaction (4).

On the contrary, reactions (5) to (8) that produce $(NH_4)_2CO_3$ and $(NH_4)HCO_3$ are reversible. These shift from left to right at ambient temperature, while they move from right to left at temperatures ranging from 30°C to 60°C.

Both ammonium carbonate and bicarbonate appear in the form of crystals.

The reaction (1), although it would be effectively used for CO2 capture, for example, in thermo-electric units, is avoided due to the increased Lower Explosive Limit (LEL).

1) The CO2 capture reaction is very fast and efficient (92-94%).

2) The absorption capacity of the NH3-CO2-H2O solution is very high and is 0.9 kg CO2/kg NH3.

The predominant solid in the solution is (NH4)HCO3.

$$NH_3(aq) + H_2O \; D \; NH_3O^+ + OH^- \qquad (9)$$

$$CO_2(aq) + H_2O(l) \leftrightarrows NCO_3^- + H^+ \qquad (10)$$

$$NCO_3^- \leftrightarrows CO_2^- + H^+ \qquad (11)$$

$$H_2O(l) * OH^- + H^+ \qquad (12)$$

$$NH_3(aq) + NCO_3^- \leftrightarrows NH_2COO^- + H_2O(l) \qquad (13)$$

Solution- Gas Equilibrium:

$$CO_2(g) * CO_2(aq) \qquad (14)$$

$$NH_3(g) \leftrightarrows \downarrow NH_3(aq) \qquad (15)$$

$$H_2O(g) \leftrightarrows \downarrow H_2O(l) \qquad (16)$$

Solution- Solid Equilibrium:

○

$$NH_4^+ + NCO_3^- \leftrightarrows NH_4HCO_3\ (s) \qquad\qquad (17)$$

$H_4^+ + NH_4COO^- \leftrightarrows NH_2COONH_4\ (s) \qquad (18)$

○

$$2NH_4^+ + CO_2^{2-} + H_2O \leftrightarrows (NH_4)_2CO_3(s) + H_2O(s) \qquad (19)$$

$H_2O(l) \leftrightarrows\downarrow H_2O(s) \qquad (20)$

○

$$4NH_4^+ + CO_3^{2-} + 2HCO_3^- \leftrightarrows (NH_4)_2CO_3(s) + 2NH_4HCO_3\ (s)$$
$$(21)$$

The washing products fall into the bottom of the Spray tower's tank (third cationization stage) (10), which is supplied, on the one hand, with the alkaline solution NaOH and, on the other hand, feeds the venturi tank at the bottom through overflow, as described in the hydraulic operation of the arrangement. It should be noted that the cationization methodology is accompanied by an innovative hydraulic operation of the arrangement; otherwise, the operation on ships would be impossible. This is because enormous quantities of deionized water would be required, with all the energy and unavailable space implications beyond a certain point.

As a result, the cleanest wash water will come from the Spray tower (10), and the collected wash waters will be used for the nozzles in the quench and venturi. Subsequently, they will overflow for processing, where, through a disoleator separator and a crociodosis system, and finally a paper filter that does not allow the passage of particles larger than 20 microns, they will undergo treatment. Unprocessed products (particles larger than 20 microns, emulsion oils, etc.) are stored in a special tank, from where they are pumped out with a submersible pump and delivered to ports for further processing in industrial waste units.

The exhaust gases exiting the ship's funnels contain SOx, NOx, as well as other volatile hydrocarbons as a result of combustion.

The concentration of SOx in the exhaust gases of heavy fuel oil combustion is high because the sulfur content in the fuel (heavy fuel oil) reaches up to 4%. It should be noted that seawater contains sulfur salts, carbonates, and chlorides, and the potential for absorbing more sulfur from the flue gases with seawater is limited because it is almost saturated. This explains the requirements for thousands of cubic meters per hour with very low efficiency, as evidenced by existing systems attempting to address this issue.

The generated heat that needs to be extracted from a diesel engine with a power of, for example, 10 MW is equal to Q = m * cp * ΔT = 75,000 kg * 0.24 kcal/kg.°C * (430°C - 250°C) = 3,240,000 kcal/h.

With a heat recovery system, specifically a water/flue gas heat exchanger, we can reduce, recover, and reclaim a portion of the vast amount of energy that is lost. This results in fuel savings for the ship's propulsion and simultaneously lowers the temperature of the exhaust gases, which is the primary objective. This is achieved as follows.

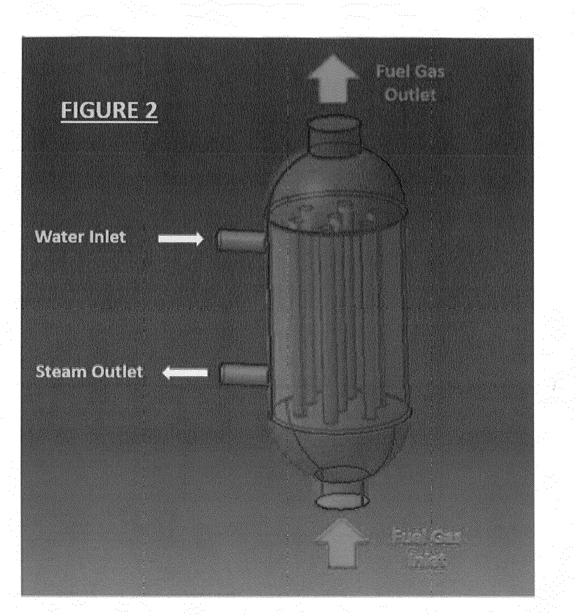

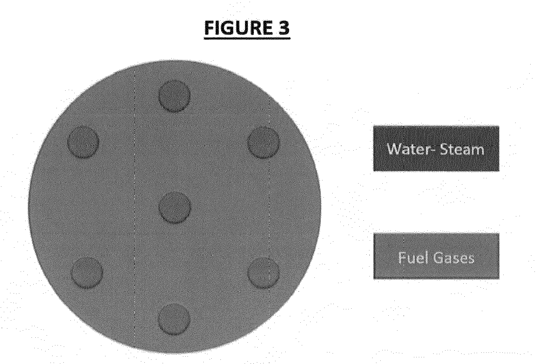

In the ship's chimney, specifically at the appropriate level of the vessel, we create a bypass so as to divert and force the flow of exhaust gases to pass through a heat exchanger in a flow, through the pipes, and the water externally to them, as depicted in Figure 2 and in the cross-section of this Figure 3.

We cannot reduce the outlet temperature of the exhaust gases too much because there is a risk of liquefaction of the condensable substances contained in the exhaust gases and their deposition on the pipes-tubes of the heat exchanger in Figure 2 and Figure 3, through which they will then pass, significantly reducing the heat transfer coefficient to the water.

Therefore, we limit ourselves to, for example, 250°C to ensure the continuous operation of the unit, avoiding potential maintenance issues. At the same time, energy will be saved equal to Q = m cp $\Delta$T = 75,000 kg × 0.24 kcal/kg°C × (430°C - 250°C) = 3,240,000 kcal/h. Given that the lower heating value of heavy fuel oil is 8,000 kcal/h, this corresponds to a saving of 405 kg/h of heavy fuel oil.

The generated steam from the heat exchanger amounts to 5,800 kg/h.

Of these, 1000 kg/h will supply the heating system for the liquefaction of heavy fuel oil, leaving 2,240,000 kcal/h to be introduced into the steam turbine for energy production. This means, firstly, that the steam produced from the recovery will eliminate the use of the steam generator that consumes heavy fuel oil for preheating and liquefaction of the heavy fuel oil required to enter the diesel engines. Secondly, by introducing the excess steam into a steam turbine, it will generate supplementary power for the ship's propulsion or, alternatively, for the operation of the high-capacity generators on the ship.

Due to the high speed of the steam turbine shaft, which ranges from 5200 rpm, it will be coupled with a gear reducer at a speed ratio of 1/2 to be connected to the generator, whose speed ranges at 2400 rpm.

The power of the steam turbine, with the above assumptions, both for the specific case and for the given propulsion power, will fluctuate around 0.5 MW.

The system is closed, and the water is deionized.

It should also be noted that by using a diesel fuel type 0.5 with much lower sulfur concentration, which frees us from the risk of depositing catamic substances, we can reduce the outlet temperature of the exhaust gases, for example, from 250°C to 130°C. This results in $\Delta$T = 430°C - 130°C = 300°C, translating to energy savings Q = m cp $\Delta$T = 75,000 kg × 0.24 kcal/kg.°C × (430°C - 130°C) = 5,400,000 kcal/h. Since the resulting steam is around 10,000 kg/h and the power P = M × $\Delta$H × $\eta$t/860 = M × $\Delta$H/1000 with $\eta$t = 0.86, it yields 0.8 MW.

The energy saved from the operation of ships increases with the power of the propulsion diesel engines. This means that the energy-saving and production system for the ship can operate independently if there is no need to neutralize SOx. The operation of the arrangement is as follows: We place a properly dimensioned water/gas thermal exchanger on the deck at a suitable location. The water enters at 20°C and exits as steam at 110°C. The flue gases enter at 250°C and exit, for example, at 500°C. They then enter the upper end of the venturi tube and are subsequently directed to the lower end of the washer-scrubber.

The cationization in the scrubber will take place in two stages. This ensures that any quantity of gases that has escaped processing in the first stage undergoes treatment in the second stage. This achieves the complete percipitation of SOx, NOx, CO, and partially of CO2, ethanal, and oily substances.

As the flue gases pass through the first stage, a venturi tube will be placed upstream of it. After the entry of the flue gases into the venturi, a cationization system with the same alkaline solution will be present to primarily reducethe temperature from 50°C to 28-32°C.

The cationization water will come from seawater supplied with submerged pumps. After passing through a reverse osmosis desalination system, a suitable quantity of NaOH will be added to the first and second stages. In the third tower (27), exclusively ammonia hydroxide is used to fully neutralize CO2, resulting in a solution, ammonium bicarbonate, that is alkaline with the desired pH in the cationization processes.

This alkaline solution will be injected vertically into the swirling flow of flue gases under appropriate pressure, preventing the passage of untreated flue gases to the respective outlet of each tower.

The particles, as well as the oily and tarry substances primarily precipitated in the bottom of the first tower and to a much lesser extent in the bottom of the second tower (27), along with the aqueous solution containing sodium sulfates and sulfites, are directed into a collection tank. In this tank, the floating oily and tarry substances are separated, and through a separator, the oily and tarry substances are directed into a properly sized tank. These substances will be further processed in a suitable port.

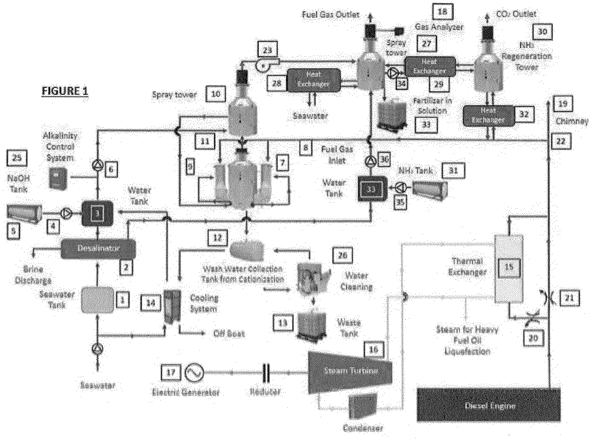

The processed water, being at a higher temperature, will reduce its temperature through a thermal exchanger (14) with seawater in a countercurrent flow. Then, by adding metered amounts of the same alkaline solution, it will impart the same chemical characteristics to the solution. The operation of the scrubber will continue in a closed-loop, as depicted in Figure 1. After entering the quench, they will undergo a pretreatment, namely, an initial neutralization with an alkaline solution NaOH.

Next, through the pipeline connection, the outgoing flue gases will enter the first'venturi ionization stage using the same alkaline solution. After complete mixing of the molecular groups of the flue gases with the droplet mist of the alkaline solution, the effluents from the first stage undergo a similar wash in the second main stage, the Spray tower (10), continuing with the same alkaline solution. Subsequently, the gases exit the droplet scrubber located at the top, 99.9% free from S, 99.9% of particles, NOX, CO, and partially from CO2. They are then propelled by the fan/blower (23) at positive pressure to enter the base of the tower (27) under the free surface of the ammonium hydroxide solution, achieving maximum CO2 solubility. This process releases the gases, specifically CO2, creating small bubbles on the free surface, which then break up, aided by the ionization occurring simultaneously with the ammonium hydroxide solution. This solution is supplied by a metering pump from the ammonia tank (33) to undergo ionization again so that the gases undergo further scrubbing, ensuring complete precipitation of carbon dioxide. This is achieved by binding it as diammonium carbonate in the bottom of the tower (27). The gases undergo further ionization with deionized water at the point of their passage, preventing the potential escape of ammonia. They exit the third tower (27) after passing through the droplet scrubber at the top, free from SOX and particles by 99.9%, NOX by 80%, CO by 80%, and CO2 by 90%.

At this point, we have two options:

Option 1 - We store the aqueous solution of diammonium carbonate, after first using the thermal exchanger (32) and a vacuum pump to remove a quantity of water (evaporation) from the aqueous solution. This is done to approach the ratio of 1kgNH3/3kgCO2/1kgH2O and is then stored in the tank (33). The aqueous solution of diammonium carbonate is a fertilizer and has many uses.

Option 2 - We pump the aqueous solution of diammonium carbonate from the bottom, using a pump to pass through the thermal exchanger (29) and be transferred to the bottom of the fourth tower (30). There, it is heated by the thermal exchanger (32), and at a temperature between 300°C-400°C, diammonium carbonate breaks down, releasing ammonia and carbon dioxide, which rise to the top. To prevent the escape of ammonia from the top after the droplet scrubber of the fourth tower (30), ionization is implemented with deionized water to precipitate the ammonia, which then returns to the third tower (27). The CO2 exits from the top, and subsequently, we can liquefy it for storage.

It should be noted that the aforementioned calculations for a specific propulsion power of the ship equal to 10MW were performed to make the method and idea clear. However, the methodology and process for neutralizing SOx, NOx, CO2, CO, ethanol, oily substances, with simultaneous energy recovery, remain unchanged for any propulsion power of the ship. It should also be emphasized that when the pollution gas processing unit is not in operation, with its shutdown, the gas passage returns to the previous state.

The cleaning of the gas passages is achieved by removing the covers of the exchanger and using an iron brush. The description of the unit's operation is as follows:

We activate the unit, and the submerged pumps, equipped on each ship, automatically operate, transferring seawater from sea level to the tank (1) on the deck.

From this tank, water is pumped to pass through the desalination system (2) with membranes in a double stage. The resulting brine is discharged into the sea, while the desalinated water is placed in a tank (3). Using a dosing pump (4), NaOH is added to achieve the desired alkalinity level of the resulting aqueous solution, monitored by the alkalinity control system (25).

The dosing pump supplies caustic soda from the special tank (5), which contains NaOH.

From tank (3), through a pump (6) at an appropriate pressure, three or more positions are supplied for the scrubbing of the exhaust gases. These positions are the first position descent (7) of the gas entry into the quench, the second position in the venturi tube (8), together forming the first stage (9) of the scrubber's ionization, and the third position (10), which is the second stage of the ionization of the scrubber's Spray tower (10).

Next, the exhaust gases, propelled by the fan (23), enter the base of the tower (27) and emerge in the form of small bubbles on the free surface of the alkaline aqueous solution of ammonium hydroxide. They undergo ionization with the same alkaline solution of ammonium hydroxide.

At this point, we have two options: either we use the resulting double salt ammonium solution as fertilizer by removing some water through evaporation, or we push this salt into the fourth tower (30). After supplying it with heat through the thermal exchanger (32), the double salt ammonium breaks down. The ammonia, after undergoing ionization with deionized water, returns to the tower (27). The carbon dioxide is collected at the top of the fourth tower (30) and liquefied.

It should also be noted that the nozzles of the alkaline solution will be appropriately constructed and operate in such a way that the injection is perpendicular to the flow of gases, creating turbulent flow to increase the vorticity with the ultimate goal of maximizing the mixing surface of molecular droplets and molecular gas assemblies for the effective precipitation of SO2, CO2, NOX, CO, and ethane.

The wash water residues, along with particles and oily and tarry substances, will be collected in a tank (12). The floating oily and tarry substances are separated directly and stored in another tank (13) for delivery to the selected port. The wash water, which has a temperature ranging between 270C-350C, is directed to a thermal exchanger (water/water) (14), where the heat of the wash water is transferred, using seawater at a temperature of about 15°C, allowing the recycled water to enter the tank (3) at the same temperature.

This way, the demand for desalinated water and consequently the energy consumption becomes minimal, as well as that of caustic soda, since the pH of the recycled water is alkaline. A complete renewal of the total water used occurs every hour. The quantity of used water is minimal compared to what is available in the market, resulting in the economic operation of the system, maintaining its effectiveness in neutralization consistently over time.

At the same time, the exhaust gases from the diesel engine entering the heat exchanger (15) (air/water) transfer their thermal load to the water, which vaporizes. The resulting steam, in sufficient quantity, is first directed to the system for liquefying heavy fuel, which is equipped on all ships using heavy fuel.

The remaining steam mass is supplied to a steam turbine (16) with a suitable gearbox connected to it, coupling with the generator (17).

The outgoing gases from the economizer, entering the main stack, create, on the stack, an innovative deceptive entry into the atmosphere (22) to avoid the creation of back pressure on the diesel engine. The innovative design of the deceptive introduction of the flue gases into the gas treatment unit was made to avoid problems with the back pressure of the diesel engine, such as the possible blocking of the relief valves by the deposits of tarry substances on them, with any consequences (fire).

Our system operates without the presence of relief valves because it is the underpressure created by the fan that absorbs the flue gases from the stack and directs them towards ionization.

The proposed unit was implemented in PIRAEUS-PERAMA, coupled with the flue gases from a real ship's diesel generator with a power of 0.5 MW. The results of repeated measurements conducted by an internationally accredited certification company are presented on the next page.

It should be noted that the efficiency of the system in neutralization will increase by 10-12% when larger capacity arrangements are implemented due to fluid mechanics peculiarities.

This system is depicted in Figure (1) and is not found anywhere else in the world.

| Parameter | Unit | Up stream 12/5/23 | Up stream 12/5/23 | Down stream 12/5/23 | % Reduction | | Up stream 12/5/23 | Down stream 12/5/23 | % Reduction |
|---|---|---|---|---|---|---|---|---|---|
| | | 11:35-11:43 | 11:55-12:07 | 12:10-12:56 | 1st test | 2nd test | 12:59-13:20 | 13:21-15:00 | |
| | | AVERAGE VALUE | | | | | | | |
| $CO_2$ | % | 4,5 | 4,5 | 1,3 | 71,1 | 71,1 | 4,6 | 3,1 | 32,6 |
| CO | mg/Nm$^3$ dry | 906,4 | 804,8 | 906,2 | 0,02 | -12,6 | 841,8 | 925,2 | -9,91 |
| $SO_2$ | mg/Nm$^3$ dry | 1768,7 | 1802,8 | 17,9 | 98,9 | 99,0 | 1555,1 | 26,3 | 98,3 |
| $NO_X$ | mg/Nm$^3$ dry | 792,6 | 759,2 | 743,0 | 6,26 | 0,02 | 653,1 | 626,1 | 4,13 |

**Claims**

1. An automatic system for neutralizing greenhouse gas emissions from ship chimneys with simultaneous energy recovery consists of submersible pumps of the desired flow and pressure that feed the tank for the operation of the desalinator using the reverse osmosis process. The desalinated water is directed to a tank where a suitable quantity of alkaline solution, preferably NaOH with the appropriate pH, will be injected using a dosing pump supplied from the NaOH tank. The solution is then pressurized and sprayed in three or more positions for the ionization of flue gases. These positions include the first descent of flue gases into the venturi tube in the pre-processing phase, the second stage of processing-ionization of the washer-scrubber, and the third position which is the second stage of ionization of the washer-scrubber Spray tower. The treated gases are released into the atmosphere free of gas pollutants, while the washing water is collected in a tank. The separated oil and particles are stored in the tank for delivery to the selected port. The washing water with a lower temperature is directed to the thermal exchanger of seawater/wash water, and the seawater returns to the sea. The processed washing water with a lower temperature is directed to the tank, thus closing the cycle. A complete renewal of all used water occurs every hour. The reduction of the temperature of the outgoing gases from the chimney is achieved through a flue gas/water thermal exchanger, where the flue gases are directed through a misleading entry to the gas treatment unit. This unit is activated by putting the fan into operation, which, by creating negative pressure, absorbs the flue gases from the chimney. When deactivated, the flue gases flow back towards the chimney, avoiding the installation of on/off diversion valves and the associated back pressure in the operation of the diesel engine. The generated steam is partly directed to a steam turbine connected to the generator for electricity production and partly for the liquefaction of heavy fuel oil. It is **characterized by** the fact that the unit consists of submersible pumps of the desired flow and pressure that pump seawater and supply the tank (1) for the operation of the desalinator (2) through the reverse osmosis process. The desalinated water is directed to a tank (3), to which a suitable quantity of alkaline solution, preferably NaOH, will be added according to the control system (25). The pH of the alkaline solution is adjusted using a metering pump (4) that draws NaOH from the tank (5). The pump (6) will then be supplied from tank (3) to spray with a pressure of 2-4 bar in three or more positions to achieve the ionization of flue gases. These positions are as follows: the first descent of flue gases into the venturi tube (8) in the pre-processing phase, the second stage of processing-ionization of the washer-scrubber, and the third position where the flue gases, driven by the negative pressure of the fan/blower (23) enter the spray tower (10) and undergo an additional ionization stage with an aeous NaOH solution in the washer-scrubber spray tower (10). The treated flow gases exiting from the top of the spray tower (10) through the duct, propelled the positive pressure received during their passage from the fan/blower (23), enter below the free surface of the ammonium hydroxide aqueous solution to a required depth in the third tower (27) from the duct. This tower has an end in the form of a sieve with a large number of holes all around, releasing the flue gases that rise to the surface of the solution in the form of small bubbles containing carbon dioxide, among other gases that have not been neutralized previously. The dissolved gases, having undergone complete solubility and simultaneous neutralization by the ammonium hydroxide aqueous solution, undergo ionization with an ammonium hydroxide aqueous solution from the sprayers that spray $NH_4OH$ stored in the tank (33). It is introduced into them through the pumps (35) and discharged into the third tower (27) with a pH of the desired level through the dosing pumps (36). The flue gases, including carbon dioxide, emerge in the form of small bubbles at the free surface, and any escaped gas moves towards the top of the tower (27). Carbon dioxide is captured by $NH_4OH$ and precipitates to the bottom of the tower in the form of a sparingly soluble double salt of ammonium carbonate, mostly. To prevent ammonia from escaping from the top, ionization with deionized water is implemented below the droplet catcher of the third tower (27), and above the ionization sprayers with ammonium hydroxide, as the tower height increased. This aims to precipitate ammonia and return it to the bottom of the third tower (27). The desired degree of alkalinity (pH) of either caustic soda or $NH_4OH$ in the respective towers is achieved using control instruments (pH meters) with which all towers are equipped. Based on these levels, the necessary quantities are automatically metered and dispensed with dosing pumps, along with the corresponding solutions in the respective towers. Additionally, a heat exchanger (28) operates, extracting the remaining heat from the solution of ammonium carbonate with seawater and reintroducing the aqueous solution of ammonium carbonate into the tower (27) at a lower temperature. The wash waters, resulting from ionization with NaOH, are collected in a tank (12), and after suitable processing, the oily and particulate components are separated as stock in tank (13) for delivery to the selected port. The processed wash waters with lower temperature are directed to tank (3), thus closing the circuit. Every hour, there is a complete renewal of all used water. Wash waters from ionization with ammonium hydroxide are considered the first option, as ammonium carbonate is fertilizer. After removing a certain quantity of water through evaporation using the heat of flue gases from the diesel engine via the thermal exchanger (32) and vacuum pump, approximately achieving the ratio of $1kgNH_3/3kgCO_2/1kgH_2O$, it is stored in tank (33) and transferred to silos at ports for distribution. As a second option, the aqueous solution of ammonium carbonate from the bottom is pumped (34) through the thermal exchanger (29) and transferred to the bottom of the fourth tower (30), where it receives heat from the thermal exchanger (32). At a temperature between 300°C -400°C, ammonium carbonate decomposes, releasing $NH_4OH$ and carbon dioxide, which rise to the top. To prevent ammonia from escaping from the top before the droplet catcher of the fourth tower (30), ionization with deionized water is implemented in the upper part of the tower and below the droplet catcher, allowing ammonia to precipitate and return to the third tower (27). The CO2, however, will exit from the top, and subsequently, we can liquefy it through compression below the temperature of 320°C and store it. The temperature of the outgoing gases from the ship's chimney after the economizer (15) is reduced through the flue gas/water heat exchanger (32), in which the flue gases are compelled to traverse after their entry through the diversionary inlet (22) (towards the flue gas processing unit, activated by the fan's operation, creating negative pressure to draw the flue gases from the chimney. When the fan is deactivated, the flue gases move towards the chimney, avoiding the installation of on/off diversion valves. The generated steam is partly directed to a steam turbine (16) connected to the generator (17) for electricity production and partly for fuel oil liquefaction.

2. The automatic system for neutralizing greenhouse gas emissions from ship chimneys, with simultaneous energy recovery according to claim (1), is **characterized by** the fact that the unit consists of the desalinator using the reverse osmosis process (2). This is necessary to remove the salt contained in seawater as well as sulfur and chlorine compounds. The deposits of these salts on the surface's of the unit's components (scrubber, venturi, ejectors, pipes) cause blockages over time, leading to a -significant reduction in the neutralization of $SO_x$, NOx, $CO_2$, and CO.

3. Automatic system for neutralizing greenhouse gas emissions from ship chimneys with simultaneous energy recovery according to claims (1) and (2) is **characterized by** the fact that, for achieving maximum efficiency, which is the goal, the supply of alkaline solution NaOH and spraying will start from the third stage of ionization, namely in the Spray Tower (10). The spraying will be carried out with pumps drawing from the wash water collection tank located at its bottom and supplied by the tank (3), achieving the minimization of NaOH alkaline solution consumption. This is accomplished by recycling wash water first through the Spray Tower (10), as the flue gases will have undergone the first and second ionization, achieving approximately 95% removal efficiency of $SO_x$, $NO_x$, CO, and partially of $CO_2$, including the precipitation of particles. To achieve maximum effectiveness, as confirmed by certified measurements, it is required that the NaOH alkaline solution be as pure as possible with minimal recycling in the Spray Tower (10). After hydraulic balance is reached with the overflow of wash water from this tank below the Spray Tower (10), it moves towards the wash water collection tank of the venturi pipe and quench (located internally at their bottom). Pumps will draw and spray the incoming flue gases, and their wash water will fall into the same tank. After overflowing, it will proceed for further treatment in the processing tank, where, through a separator, disoleator system, chromatic treatment system, and finally, a paper filter that d allow the passage of particles larger than 20 microns, the untreated products (particles above 20 microns, emulsion oils, etc.) are stored in a special tank (13). From there, they are extracted with a submersible pump and delivered to ports for further processing in industrial waste treatment units.

4. Automatic system for neutralizing greenhouse gas emissions from ship chimneys with simultaneous energy recovery according to claims (1), (2), (3) is **characterized by** the elimination of the flue gas diversion valves, and the flow of flue gases is achieved through the vacuum created by the fan (23).

5. Automatic system for neutralizing greenhouse gas emissions from ship chimneys with simultaneous energy recovery according to claims (1), (2), (3), (4) is **characterized by** its ability to be installed and neutralize greenhouse gases from the chimneys of thermal power generation units using lignite, any mineral, or gaseous fuel (natural gas, LPG).

6. The method for neutralizing greenhouse gas pollutants $SO_x$, NOx, $CO_2$, CO, including ethane and other oily substances, with simultaneous energy recovery according to requirements (1), (2), (3), (4), (5), is **characterized by** the fact that, upon activation of the unit, the submerged pumps equipped on each ship automatically operate, transporting seawater from sea level to the tank (1). From this tank, water is pumped to pass through the desalination system (2) with membrane double-stage desalination, and the remaining brine is discharged into the sea. The desalinated water is then placed in a tank (3), where, using a metering pump (4), NaOH is injected to adjust the pH of the aqueous solution to the desired level of alkalinity. The metering pump draws caustic soda from a special tank (5) containing NaOH. From tank (3), through a pump (6), the solution is supplied at the desired pressure to three or more positions for the ionization of combustion gases: the first entry (7) of the gases into quench (8) during the pre-processing phase, the second, which is the first stage (9) of processing-ionization in the venturi, and the third position (10), which is the second stage of ionization in the spray tower section of the scrubber. After passing through the ionization stages under reduced pressure created by the fan (23) located at the bottom of the spray tower (10), the gases are released, free of $SO_x$, $NO_x$, CO, and partially $CO_2$. Subsequently, they enter with positive pressure applied by the fan (23) with an air duct that ends at the submerged end into a sieve with small holes at the bottom of the tower (27) below the free surface of the ammonium hydroxide ($NH_4OH$) solution, creating small bubbles that rise to the free surface of the solution. There, they break up while undergoing parallel ionization with $NH_4OH$ from the injectors at three or more heights. Continuing vertically, there is a second ionization in the same tower (27) from a greater height, using deionized water. This deionized water is supplied by pumps (36), similar to the $NH_4OH$ solution supplied from the ammonia tank (31). The resulting aqueous solution, the bicarbonate ammonium, from the chemical reaction involving $CO_2$ and the $NH_4OH$ solution, falls to the bottom of the tower (27) as the first option, leading to tank (33). After removing some water through evaporation in combination with a vacuum pump, utilizing the heat provided by the thermal exchanger (32), it is directed to a storage tank for distribution as fertilizer. As a second option, the aqueous solution of bicarbonate ammonium is pumped (34) through a thermal exchanger (29) into tower (30), where it receives heat from the thermal exchanger of flue gases (32) and breaks down into ammonia and $CO_2$. The ammonia, subjected to ionization by deionized water, falls to the bottom of the tower (30) and returns via a pump through the thermal exchanger (29) to tower (27). The released $CO_2$ from the droplet catcher of tower (30) is collected, liquefied at a temperature below 320°C, and stored. Additionally, the aqueous solution of bicarbonate ammonium passes through thermal exchanger (28), which removes the heat from the solution with the flow of seawater and releases it. It is noted that the injectors of the alkaline solution, whether releasing NaOH or $NH_4OH$, are constructed and operate in a suitable manner to ensure vertical injection into the flow of combustion gases, creating turbulent flow. The goal is to maximize the mixing surface of molecular droplets and molecular assemblies of gases, ensuring effective precipitation of $SO_x$, $NO_x$, $CO_2$, CO. After passing through the quench and crossing the first (venturi tube) due to the underpressure created by the fan at their base, the gases are pressurized to about 100 mm water column pressure in the second stage (Spray tower) of ionization. They then enter the bottom of the third tower (27) at around 28-25°C, where $CO_2$ is absorbed, and particles, oils, and tarry substances are collected in a tank (12). The floating oils and tarry substances are separated immediately and stored in another tank (13) for delivery to a selected port, while the wash waters, which have a temperature ranging between 32-27°C, are directed to a thermal exchanger (seawater/wash waters) (14). Through seawater with a temperature of approximately 15°C, the heat of the wash waters is extracted and returned to tank (3) as recycled water at the same temperature. This minimizes the demand for desalinated water and, consequently, reduces energy consumption, as well as that of caustic soda and $NH_4OH$, since the pH of the recycled water is alkaline. This process ensures minimal water usage compared to current technological standards, with

complete renewal of the total water used every hour. It should be noted that the quantity of used water is minimal compared to what exists in today's technological level.

7. The method for neutralizing gas pollutants with an automatic system, as described in claim (6), is **characterized by** having a chemical reactor core for neutralizing $SO_x$, $NO_x$, CO, including particles. This core imparts high kinetic energy to the molecules of combustion gases through the fan, translating into their high velocity. Further acceleration occurs as they pass through quench and venturi due to the geometric shape of these components. This high velocity should be in the range of 100-120 m/s and is catalytic to achieve complete mixing of droplets of the alkaline solution with the target pH with the molecules of combustion gases for the neutralization of $SO_x$, $NO_x$, CO in the first tower (quench-venturi). This process forces the remaining untreated gases, mainly $CO_2$, into water solubility through an air duct at the submerged end of a sieve with small holes. This releases gases at a necessary depth from the free surface of the alkaline solution $NH_4OH$, forming small bubbles that can be broken with the assistance of ionization. This ensures the chemical reactions for neutralization are achieved with maximum efficiency.

8. The method for neutralizing gas pollutants with an automatic system, according to claims (6), (7), is **characterized by** the fact that the number of venturi tubes required to distribute the volume of incoming flue gases is determined each time by their volume to achieve maximum efficiency, as it must not exceed the detachment limit of the boundary layer.

9. The method for neutralizing gas pollutants with an automatic system, according to claims (6), (7), (8), is **characterized by** the catalytic recycling for a specific time with a stable pH in the wash waters under the venturi tube and under the Spray Tower (10). This is because sodium hydroxide, reacting with the carbonic acid generated from the solubility of carbon dioxide in the alkaline solution, forms sodium carbonate, which behaves alkaline just like sodium hydroxide. It neutralizes the acids produced, such as sulfuric acid, nitric acid, and carbonic acid, forming the corresponding salts. Consequently, the need for caustic soda injection is significantly reduced. The same process occurs in the third tower (27) with the recycling of the ammonium hydroxide alkaline solution until its activity is exhausted. As a result, overall consumption of consumables is reduced, ultimately lowering the operational cost of the unit.

10. The method of neutralizing gas pollutants with an automatic system, according to claims (6), (7), (8), (9), is **characterized by** the fact that, since the goal of the exposure unit methodology is the maximum efficiency of gas pollutant neutralization with simultaneous minimization of operational costs, and because the neutralization of gas pollutants $SO_x$, $NO_x$, CO has been achieved to the maximum extent in the first tower (quench + venturi) to achieve maximum efficiency in neutralization, the alkaline solution of NaOH that needs to be sprayed in the Spray Tower (10) must be as minimally recycled as possible to achieve the goal. Consequently, the overflow of these wash waters, which are cleaner than the wash waters under the venturi tube, will be directed to it, thus ensuring the full utilization of the alkaline factor before being directed to the treatment of wash waters. The same technique is used in towers (27) and (30) with the alkaline solution of $NH_4OH$.

FIGURE 1

FIGURE 2

## FIGURE 3

**EUROPEAN SEARCH REPORT**

Application Number

EP 24 38 6008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | GR 2019 0100 160 A (PITTAS NIKOLAOS PANAGIOTI [GR]) 16 November 2020 (2020-11-16) * the whole document * | 1-10 | INV. B01D53/62 B01D47/10 B01D47/12 B01D53/75 |
| Y | WO 2022/092427 A1 (DAEWOO SHIPBUILDING & MARINE [KR]) 5 May 2022 (2022-05-05) * the whole document * | 1-10 | B01D53/78 B01D53/92 C02F1/44 |
| A | US 2014/127107 A1 (SUCHAK NARESH J [US]) 8 May 2014 (2014-05-08) * paragraphs [0003], [0042], [0045], [0051], [0061] - [0063]; figure 5 * | 1-10 | |
| A | US 2014/248201 A1 (HANSEN JENS PETER [DK]) 4 September 2014 (2014-09-04) * paragraphs [0042] - [0051]; figure 1 * | 1-10 | |
| A | CN 113 069 921 A (UNIV DALIAN MARITIME) 6 July 2021 (2021-07-06) * the whole document * | 1-10 | TECHNICAL FIELDS SEARCHED (IPC) B01D C02F |

The present search report has been drawn up for all claims

| Place of search | Date of completion of the search | Examiner |
|---|---|---|
| The Hague | 5 July 2024 | Howe, Patrick |

## ANNEX TO THE EUROPEAN SEARCH REPORT
## ON EUROPEAN PATENT APPLICATION NO.

EP 24 38 6008

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2024

| Patent document cited in search report | | Publication date | Patent family member(s) | | Publication date |
|---|---|---|---|---|---|
| GR 20190100160 | A | 16-11-2020 | NONE | | |
| WO 2022092427 | A1 | 05-05-2022 | EP | 4234898 A1 | 30-08-2023 |
| | | | JP | 7463620 B2 | 08-04-2024 |
| | | | JP | 2023545701 A | 31-10-2023 |
| | | | US | 2023372864 A1 | 23-11-2023 |
| | | | WO | 2022092427 A1 | 05-05-2022 |
| US 2014127107 | A1 | 08-05-2014 | AU | 2014334786 A1 | 21-04-2016 |
| | | | BR | 112016008249 A2 | 22-08-2017 |
| | | | CA | 2927588 A1 | 23-04-2015 |
| | | | CN | 106659971 A | 10-05-2017 |
| | | | DK | 2719440 T3 | 14-08-2017 |
| | | | EP | 2719440 A1 | 16-04-2014 |
| | | | EP | 3057682 A1 | 24-08-2016 |
| | | | ES | 2628621 T3 | 03-08-2017 |
| | | | HU | E033923 T2 | 29-01-2018 |
| | | | PL | 2719440 T3 | 29-09-2017 |
| | | | PT | 2719440 T | 26-06-2017 |
| | | | RU | 2016118683 A | 21-11-2017 |
| | | | TW | 201519946 A | 01-06-2015 |
| | | | US | 2014127107 A1 | 08-05-2014 |
| | | | WO | 2015057421 A1 | 23-04-2015 |
| US 2014248201 | A1 | 04-09-2014 | CN | 103842051 A | 04-06-2014 |
| | | | DK | 2760563 T3 | 06-03-2017 |
| | | | EP | 2574393 A1 | 03-04-2013 |
| | | | EP | 2760563 A1 | 06-08-2014 |
| | | | JP | 5908092 B2 | 26-04-2016 |
| | | | JP | 2014528827 A | 30-10-2014 |
| | | | KR | 20140067069 A | 03-06-2014 |
| | | | US | 2014248201 A1 | 04-09-2014 |
| | | | WO | 2013045272 A1 | 04-04-2013 |
| CN 113069921 | A | 06-07-2021 | NONE | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20190100160 A